# EUROPEAN PATENT SPECIFICATION

(11) **EP 1 253 782 B1**
(45) Date of publication and mention of the grant of the patent: **17.04.2013**
(21) Application number: 01901553.6
(22) Date of filing: 26.01.2001
(51) Int. Cl.: H04N 5/445

(54) **ELECTRONIC PROGRAM GUIDE DISPLAY CONTROLLER**
ANZEIGESTEUERUNG FÜR ELEKTRONISCHE PROGRAMMFÜHRER
UNITE DE COMMANDE D'AFFICHAGE DE GUIDE ELECTRONIQUE DE PROGRAMME

(30) Priority: 26.01.2000 JP 2000017356
(43) Date of publication of application: 30.10.2002
(73) Proprietor: Sharp Kabushiki Kaisha, Osaka-shi, Osaka 545-8522 (JP)
(72) Inventor: Takahashi, Shigeki, Sakura-shi,Chiba 285-0811 (JP); Aoki, Tamotsu, Ootawara-shi,Tochigi 324-0045 (JP); Seki, Yoshinori, Midori-ku, Chiba-shi,Chiba 266-0031 (JP)
(74) Representative: Jones, Nicolas Guy
(86) International application number: PCT/JP2001/000554
(87) International publication number: WO 2001/056271

(56) References cited:
- JP-A- 2 309 775
- JP-A- 5 083 688
- JP-A- 8 275 077
- JP-A- 8 314 979
- JP-A- 8 506 942
- JP-A- 8 511 140
- JP-A- 9 322 088
- JP-A- 11 308 549
- US-A- 5 266 932
- US-A- 5 479 268
- US-A- 5 990 883

## Description

### TECHNICAL FIELD

The present invention relates to an electronic program guide display control apparatus for creating an electronic program chart by integrating program information in a plurality of information providing systems and displaying it. More particularly, the invention relates to an electronic program guide display control apparatus with an improved electronic program guide display function.

### BACKGROUND ART

Recent years have witnessed satellite-utilizing CS (communication satellite) digital broadcasting, an information providing system, coming into practical use by the broadcasting media. A plan is also underway to digitalize BS (broadcast satellite) broadcasting. A user can watch or listen to about 100 channels even from a single system, and the number of channels that one can watch or listen to is expected to greatly increase in the future. In such a multiple channel system, an electronic program guide will be increasingly called for.

While common receiver equipment is being developed for a plurality of services in satellite digital broadcasting, there have been developments in digital networks for electric home appliances, as represented by the HAVi (home audio/video interoperability). This means that one can easily utilize signals from a plurality of services without using a common receiver if a plurality of receivers are provided on a network.

Accordingly, it is becoming increasingly important to provide an electronic program guide ("EPG") which integrates the individual electronic programs in a plurality of receivers.

As a related art, Japanese Patent Application Laying-Open (kokai) No. 8-275077, e.g., proposes a system in which EPG data transmitted by terrestrial broadcast and EPG data transmitted by satellite broadcast are individually received, converted into EPG data in an integrated format, and displayed in the form of an integrated EPG.

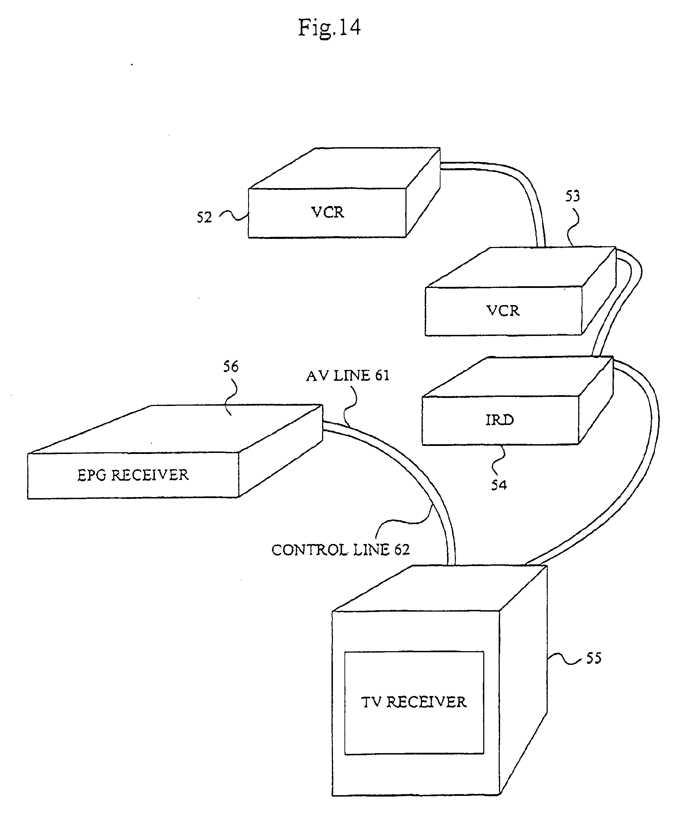

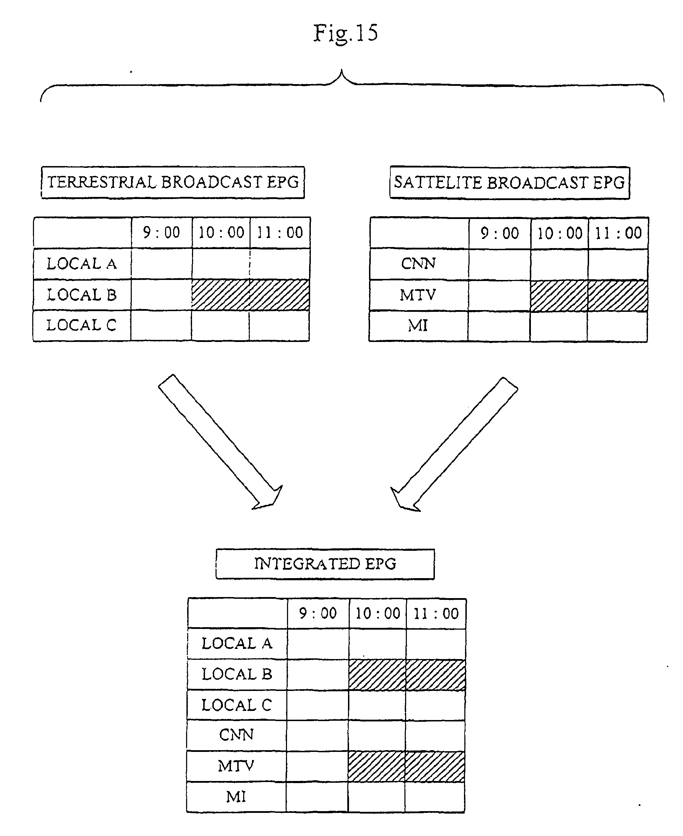

Figs. 14 and 15 show respectively a configuration of the electronic program guide system and an example of display of the EPG integrated by the system known from the above-mentioned publication.

This electronic program guide system, as shown in Fig. 14, comprises VCRs (video cassette recorders) 52 and 53, an IRD (integrated receiver/decoder) 54, a television (TV) receiver 55, and an EPG receiver 56, which are mutually connected by an AV line 61 and a control line 62. The AV line 61 consists of a composite video signal line, audio L signal line, and audio R signal line. The control line 62 includes, e.g., a wired serial control line.

In this case, EPG data of a terrestrial broadcast system is received by the TV receiver 55, while EPG data of a satellite broadcast system is received by IRD 54. The EPG data from the individual, different systems are transmitted to the EPG receiver 56 via the control line 62, and integrated into a single electronic program chart in the EPG receiver 56.

The EPG thus integrated in the EPG receiver 56 is displayed by the TV receiver 55, as shown in Fig. 15, where the EPG data of the terrestrial broadcast system that was obtained by the TV receiver 55 is displayed in the top, and the EPG data after integration with the EPG data from the satellite broadcasting system that was obtained by the IRD 54 is displayed in the bottom.

Japanese Patent Application Laying-Open (kokai) No. 4-342020 discloses a method of quickly scrolling a sequence of characters and the like on the display screen whereby a scroll area to be partially scrolled on the screen is set beforehand by the user. Only the scroll area set by the scroll instruction is scrolled first, and the rest is drawn at the end of the scroll instruction, thus executing the scroll operation quickly.

Japanese Patent Application Laying-Open (kokai) No. 2-146619 discloses a scroll technique whereby a plurality of different images are displayed simultaneously in a divided manner while setting the images to be displayed in a divided manner and the dividing positions, an image to be operated by a key is designated, and each image in the divided display is independently scrolled.

However, there was the problem in the above-described conventional electronic program guide systems that, when the EPG data from the terrestrial broadcast system and the EPG data from the satellite broadcast system are integrated, if there are many items of EPG data from the terrestrial broadcast system that meet the display conditions, only the EPG data from the terrestrial broadcast system is displayed in the integrated electronic program chart. This is because there are only so many items that can be displayed simultaneously on the screen of the TV receiver 55.

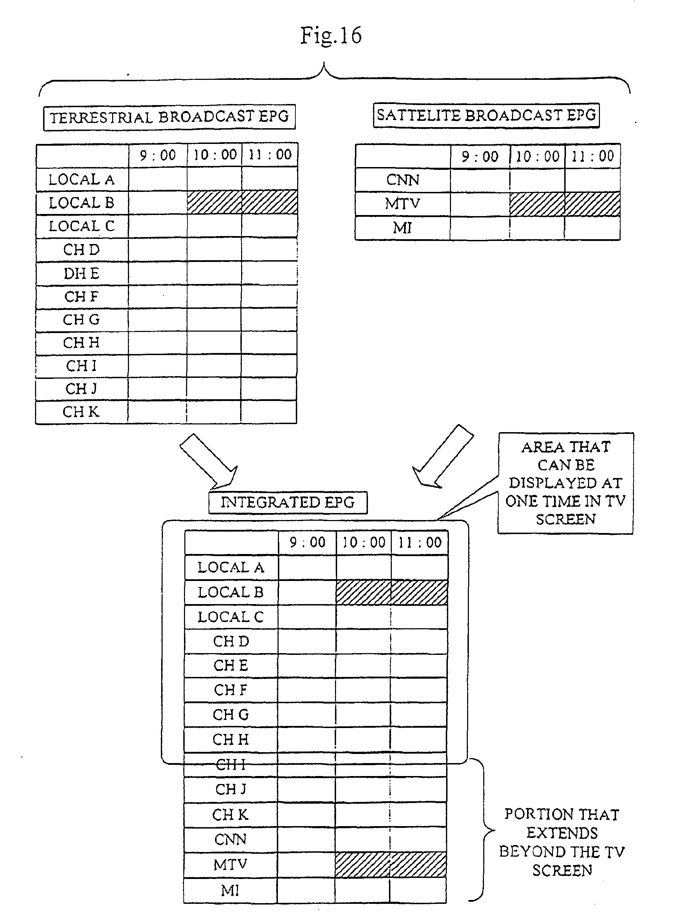

This problem is further explained with reference to Fig. 16. In the figure, there are 11 items of program information extracted from the terrestrial broadcast system and three items of program information from the satellite broadcast system, so that there are a total of 14 items to be included in the integrated electronic program chart. However, if the number of items that can be displayed on the screen of the TV receiver 55 is limited to eight, for example, all of the 14 items cannot be displayed.

The same problem can occur in cases where the EPG display conditions arc designated (such as, e.g., only those items that belong to a particular category), or certain items are designated not to be displayed. Further, if the program information about the satellite broadcast system is displayed by scrolling the screen, the user will have to scroll down continuously to the program list for the satellite broadcast system via the program list for the terrestrial broadcast system before the program information about the satellite broadcast system located further below can be displayed on the screen.

Japanese Patent Application Laying-Open (kokai) No. 4-342020 discloses a method whereby a scroll area is set beforehand when the user partially scrolls on the screen. Japanese Patent Application Laying-Open (kokai) No. 2-146619 discloses another method whereby images to be displayed in a divided manner and their division positions are set, an image to be operated by a key is designated, and each image in the divided display is independently scrolled. In these known methods, however, it is extremely troublesome for the user to have to determine the area to be partially scrolled or the division positions themselves, because the user cannot tell how many programs are contained in the program guide list or what kind of programs they are when he or she refers to the program guide for the first time.

Furthermore, there is the problem that, when an information providing system based on a disc medium such as the DVD (digital versatile disc)-Video ("DVD") is provided on a network, the DVD content cannot be treated in the same manner as with the broadcast programs, so a DVD program cannot be selected from the integrated EPG screen (electronic program chart) in the same manner as with the broadcast programs.

In view of these problems of the prior art, it is an object of the present invention to provide an electronic program guide display control apparatus capable of displaying program information for a plurality of information providing systems based on, e.g., broadcast media and recorded media, on the screen in an integrated manner with a proper ratio between the individual information providing systems as defined in the claims. It is another object of the present invention to provide an electronic program guide display control apparatus capable of efficiently selecting and displaying a desired program by scrolling from a list of a great number of programs by automatically and properly switching the scroll area per se, or by automatically and properly limiting the scroll area.

US 5 479 268 discloses a screen for a user interface of a television schedule system and process consisting of an array of irregular cells, which vary in length, corresponding to different television program lengths of one half hour to one-and-one half hours or more. The array is arranged as three columns of one-half hour in duration, and twelve rows of program listings. Some of the program listings overlap two or more of the columns because of their length. Because of the widely varying length of the cells, if a conventional cursor used to select a cell location were to simply step from one cell to another, the result would be abrupt changes in the screen as the cursor moved from a cell of several hours length to an adjacent cell in the same row. An effective way of taming the motion is to assume that behind every array is an underlying array of regular cells. By restricting cursor movements to the regular cells abrupt screen changes will be avoided. With the cursor, the entire cell is 3-D highlighted, using a conventional offset shadow. The offset shadow is a black bar that underlines the entire cell and wraps around the right edge of the cell. To tag the underlying position - which defines where the cursor is and thus, where it will move next - portions of the black bar outside the current underlying position are segmented, while the current position is painted solid.

US 5 990 883 discloses a system and method of selecting content from a plurality of different physical sources and from a variety of content sources that are available from the physical sources. In one example, physical sources comprise different signal sources or types, such as terrestrially broadcast signals and cable television signals. Content sources comprise different channels or network sources. The method includes a step of displaying an integrated listing of content entries for selection by a user, wherein each content entry is associated with both a content source and a physical source from which particular content is available. The system accepts a selection from the user of a single content entry, and in response renders the content source associated with the selected single content entry from the physical source that is also associated with the selected single content entry. The invention also includes steps of obtaining content data for a plurality of different content sources in a variety of data formats, and of translating the content data into an integrated database having a predefined schema.

### DISCLOSURE OF THE INVENTION

According to the present invention there is provided an electronic program guide display control apparatus comprising: storage means for storing program information for each of a plurality of information providing systems; integration means for creating an electronic program chart by selectively integrating program information stored in the storage means; display means for displaying the electronic program chart created by the integrating means; display item number determination means for determining the number of items of program information integrated by the integration means for each information providing system and according to a predetermined integration condition; and scroll means for scrolling the program information list.

Preferably, the apparatus further comprises designation means for discretionally designating the integration condition.

In a preferred arrangement the apparatus further comprises: program information request means for requesting, via a communications network, the program information for the information providing systems; and program information reception means for receiving, via a communications network, the program information for the information providing systems, wherein the program information received by the program information reception means is stored in the storage means for updating.

Preferably, the program information request means requests the program information for the information providing systems when a bus reset is performed in the communications network.

Preferably, the program information request means requests the program information for the information providing systems when the electronic program chart created by the integration means is displayed.

Preferably, the apparatus further comprises change request determination means for receiving a request for changing the content of the program information for the information providing systems, wherein the program information request means requests, when the change request determination means received a change request, at least program information whose content has been changed.

Preferably, the program information contains content information recorded in a recording medium mounted on the information providing system.

Preferably, the apparatus further comprises conversion means for converting the content information into data that can be displayed in the form of the electronic program guide.

In a preferred embodiment, the apparatus further comprises: determination means for determining whether or not the program information integrated by the integration means agrees with the program information for the information systems; and modification means for modifying, when the result of determination in the determination means is negative, the electronic program chart created by the integration means according to the program information for the information providing systems.

Preferably, an electronic program guide display control apparatus further comprises: cursor display means for designating a position on a screen of the display means; movement instruction means for moving the position of a cursor displayed by the cursor display means; scroll means for scrolling the program information list for each information providing system according to the cursor position.

Preferably, an electronic program guide display control apparatus further comprises: start/end point detection means for detecting a start point and an end point of a scroll area of each program information list for each information providing system; and system designation means for switching, when the start/end point detection means has detected a start point or an end point, a scroll from one program information list which was being scrolled to another program information list.

In a preferred arrangement the apparatus further comprises display category designation means for displaying a program information list which is created by sorting the program information for each information providing system according to a predetermined display category; wherein the display item number determination means is operable to determine the number of items of the program information sorted by each display category, for each display category, and on the basis of a predetermined integration condition; cursor display means for designating a position on a screen of the display means; movement designation means for moving the position of a cursor displayed by the cursor display means; and scroll means for scrolling the program information list sorted by each display category, according to the cursor position.

Preferably, the apparatus comprises program chart creating means for creating an electronic program chart by selecting the program information stored in the storage means; said display means being operable to display the electronic program chart created by the program chart creating means; display category designation means for displaying a program information list created by sorting the program information for the information providing system according to a predetermined display category; the display item number determination means being operable to determine, for each display category and according to a predetermined integration condition, the number of items of program information sorted by each display category; cursor display means for designating a position on a screen of the display means; movement instruction means for moving the position of a cursor displayed by the cursor display means; and scroll means for scrolling, according to the cursor position, a program information list sorted by each display category.

Preferably, an electronic program guide display control apparatus further comprises: start/end point detection means for detecting a start point and an end point of a scroll area in each program information list sorted by each display category; system designation means for switching, when the start/end point detection means has detected a start point or an end point, a scroll from one program information list which was being scrolled to another program information list.

It is preferred that the program information list sorted by a display category designated by the display category designation means is a high viewer-rating programs list based on viewer-rating information, or a list of programs which the user has seen most often in the past.

In order that the present invention be more readily understood, specific embodiments thereof will now be described with reference to the accompanying drawings.

### BRIEF DESCRIPTION OF THE DRAWINGS

Fig. 1 shows a block diagram of the electronic program guide display control apparatus according to a first embodiment.
Fig. 2 shows an example of an electronic program chart integrated by an integration unit 16 of Fig. 1 and displayed on a display unit 17.
Fig. 3 shows a flowchart of the process of determining the number of items to be displayed. This process is performed in a display item number determination unit 18 of Fig. 1.
Fig. 4 shows a flowchart of the process of converting TOC information into EPG data. This process is performed in a conversion unit 26 of Fig. 1.
Fig. 5 shows an example of the electronic program chart created by the integration unit 16 of Fig. 1 and displayed on the display unit 17.
Fig. 6 shows another example of the electronic program chart created by the integration unit 16 of Fig. 1 and displayed on the display unit 17.
Fig. 7 is another example of the electronic program chart created by the integration unit 16 of Fig. 1 and displayed on the display unit 17.
Fig. 8 shows a block diagram of the electronic program guide display control apparatus according to a second embodiment.
Fig. 9 illustrates a scroll function of the electronic program guide display control apparatus according to the second embodiment.
Fig. 10 shows a flowchart of the processing that is performed for the scroll function of the electronic program guide display control apparatus according to the second embodiment.
Fig. 11 shows a block diagram of the electronic program guide display control apparatus according to a third embodiment.
Fig. 12 illustrates the scroll function of the electronic program guide display control apparatus according to the third embodiment.
Fig. 13 shows a flowchart of the processing performed for the scroll function of the electronic program guide display control apparatus according to the third embodiment.
Fig. 14 shows the structure of the electronic program guide system according to the prior art.
Fig. 15 shows an example of the EPG integrated by using the electronic program guide system according to the prior art.
Fig. 16 illustrates how the EPG in the electronic program guide system according to the prior art is displayed.

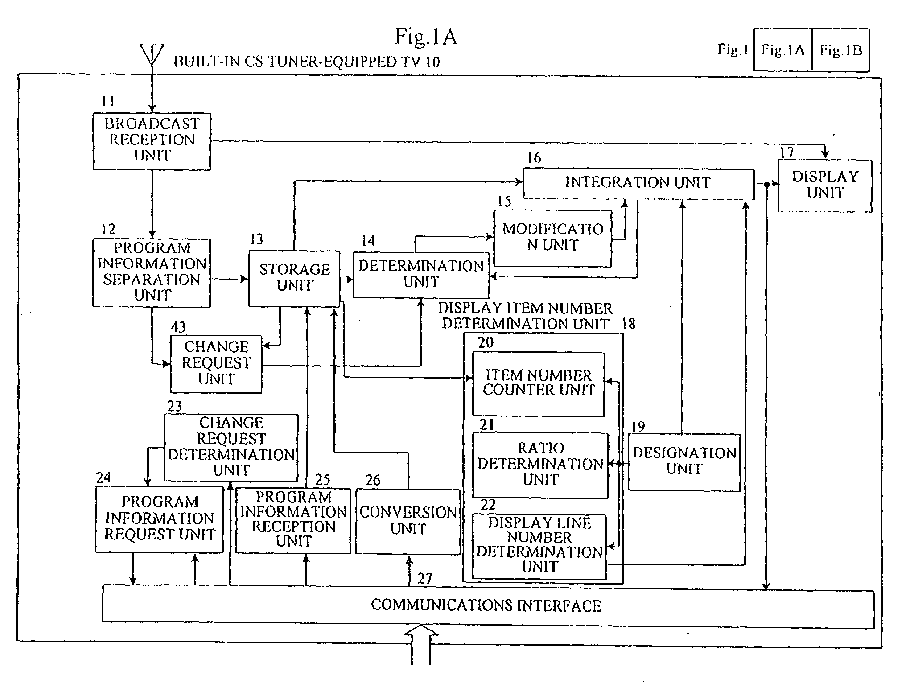

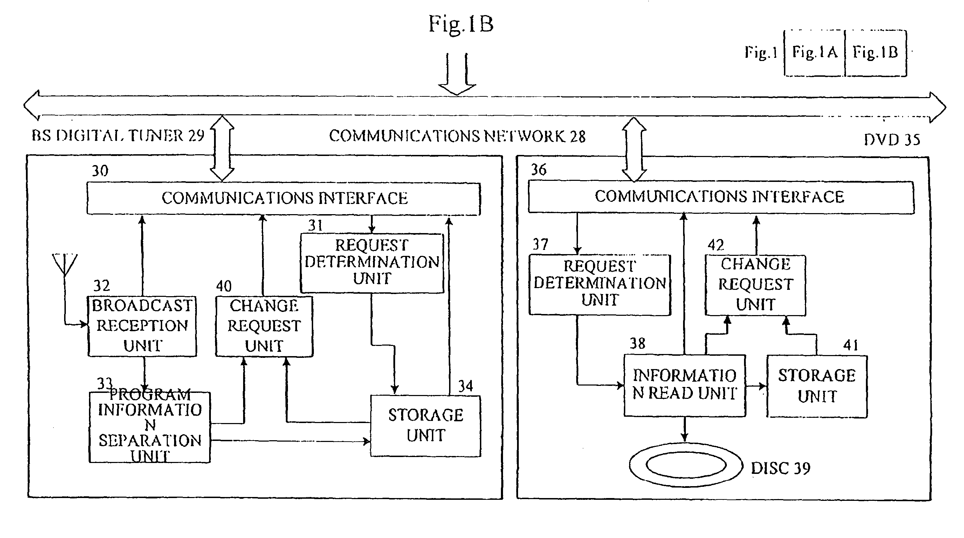

First, a first embodiment of the present invention will be described by referring to Figs. 1 to 7.

Fig. 1 shows a block diagram of the electronic program guide display control apparatus according to the present embodiment.

In the drawing, numeral 10 designates a built-in CS tuner-equipped TV, 28 a communications network, 29 a BS digital tuner, and 35 a DVD forming an information providing system formed by a disc-medium.

The built-in CS tuner-equipped TV 10 comprises a broadcast reception unit 11, a program information separating unit 12, a storage unit 13, a determination unit 14, a modification unit 15, an integration unit 16, a display unit 17, a display item number determination unit 18, a designation unit 19, a change request determination unit 23, a program information request unit 24, a program information reception unit 25, a conversion unit 26, and a communications interface 27. The display item number determination means 18 comprises an item counter unit 20, a ratio determination unit 21 and a display digit number determination unit 22.

The BS digital tuner 29, which is connected to the built-in CS tuner-equipped TV 10 via the communication network 28, comprises a communications interface 30, a request determination unit 31, a broadcast reception unit 32, a program information separating unit 33, a storage unit 34, and a change request unit 40.

While in this example the BS digital tuner 29 is connected as a BS digital system, this is only exemplary and it may be a TV receiver capable of receiving an EPG for the conventional terrestrial broadcast (where the data is superposed in the video signal blanking period), for example.

The DVD 35, which is connected to the built-in CS tuner-equipped TV 10 via the communications network 28, comprises a communications interface 36, a request determination unit 37, an information read unit 38, a storage unit 41, a change request unit 42, and a disc 39 inserted in the DVD 35.

While in this example the DVD 35 is provided as an information providing system formed by a disc-medium, this is only exemplary and the information providing system may be formed by, e.g., a VCR as long as the information (such as the table of content TOC including the title and recording time) about the content recorded in the recording medium is recorded in the recording medium per se.

The communications network 28 may be the conventional AV connection cable, a serial control line, or a wireless communications network using infrared or radio waves. The present example, however, uses an IEEE1394 connection complying with the IEEE (The Institute of Electrical and Electronic Engineers) 1394 High Performance Serial Bus standard, which allows the video and audio signals to be transmitted in the form of digital signals. Accordingly, the communications interface 27, communications interface 30, communications interface 36 are IEEE 1394 interface devices. In the IEEE1394 interface, a bus reset is automatically carried out at such times as when a new device is connected to the communications network 28, or when the device is newly switched on while being connected by cables.

The bus reset initializes the information about a previously established connection in the communications network and re-recognizes and re-defines the individual devices that are connected. For example, when the BS digital tuner 29 is connected to the built-in CS tuner-equipped TV 10 via the communications network 28, as the BS digital tuner 29 is switched on, a bus reset is performed.

As the bus reset occurs, the communications interface 27 instructs the program information request unit 24 of the built-in CS tuner-equipped TV 10 to request the device (BS digital tuner 29), newly connected to the communications network 28, to transmit new EPG data.

In the above structure, the radio wave for digital satellite multi-channel broadcast such as Perfec TV™ is received by the broadcast reception unit 11 of the built-in CS tuner-equipped TV 10 via a parabola antenna (not shown), for example.

The video and audio signals are compressed by the MPEG (Moving Picture Experts Group) standard and transmitted in the form of multiplexed bit stream data combined with additional information.

The EPG data is included in this additional information. The EPG data generally includes, e.g., program titles, start and end times (or the length of the program), program price (in the case of a pay program), detailed program information (such as the names of the actors/actresses, story, etc.), program rating information (whether it is for children or adults, age limit, etc.), and category information (including the genre, i.e., whether it is a sports program or a movie program, etc.).

The multiplexed data received in the broadcast reception unit 11 is processed for various purposes including billing in the case of paid broadcast, descrambling, and MPEG-decoding (not shown), before being displayed on the display unit 17. The EPG data is separated from the bit stream by the program information separating unit 12 and then stored in the storage unit 13.

If the user gives an instruction for confirming the EPG, the EPG data stored in the storage unit 13 is read from the storage unit 13 by the integration unit 16 and, here, an electronic program chart is created based only on the information about programs in the single CS digital broadcast system according to conditions designated by a designation unit 19. In the designation unit 19, movie programs and the like after the current time are designated by the user, and EPG screen data is created in the integration unit 16 based on program information that meet the designated conditions. The screen data created by the integration unit 16 is displayed by the display unit 17 by replacing, or being superposed or combined with, the normal display screen.

As the radio wave for BS digital broadcast is received by the broadcast reception unit 32 of the BS digital tuner 29, the EPG data for the BS digital broadcast system is separated from the multiplexed bit stream data by the program information separating unit 33. The separated EPG data is stored in the storage unit 34.

As the above-described bus reset occurs, the transmission request information from the program information request unit 24 of the built-in CS tuner-equipped TV 10 is transmitted via the communications interface 27, communications network 28, and communications interface 30 and recognized by the request determination unit 31 of the BS digital tuner 29. The EPG data for the BS digital broadcast system stored in the storage unit 34 is received by the broadcast reception unit 25 of the built-in CS tuner-equipped TV 10 via the communications interface 30, communications network 28, and communications interface 27, and then stored in the storage unit 13.

Thus, the EPG data for the CS digital broadcast system and BS digital broadcast system received by the built-in CS tuner-equipped TV 10 and the BS digital tuner 29, respectively, are stored in the storage unit 13.

The storage unit 13 may store the EPG data for the individual digital broadcast systems at separate storage regions. Alternatively, the EPG data from the BS digital tuner 29 and the EPG data received by the built-in CS tuner-equipped TV 10 may be stored in the storage unit 13 together with system identification information.

When the EPG data for the CS digital broadcast system and BS digital broadcast system are stored in the storage unit 13, if the user designates, for example, the genre movies as a condition by means of the designation unit 19, an item number counter unit 20 of the display item number determination unit 18 retrieves programs from the EPG data in the storage unit 13 that meet the designated condition, and counts the number of the programs for each system. For example, if there are 10 movie programs on the CS digital broadcast system and five movie programs on the BS digital broadcast system, the ratio determination unit 21 calculates, based on these numbers, the ratio of the numbers of the movie program items between the two systems, which is 2:1.

When the maximum number of lines in the electronic program chart that can be displayed in the display unit 17 is eight, the display digit number determination unit 22, based on the maximum line number and the item number ratio, assigns five lines (which is the rounded-off result of eight linesx2/3) to the CS digital broadcast system, the remaining three lines to the BS digital broadcast system, and determines the number of display lines for each system on the EPG screen integrated by the integration unit 16.

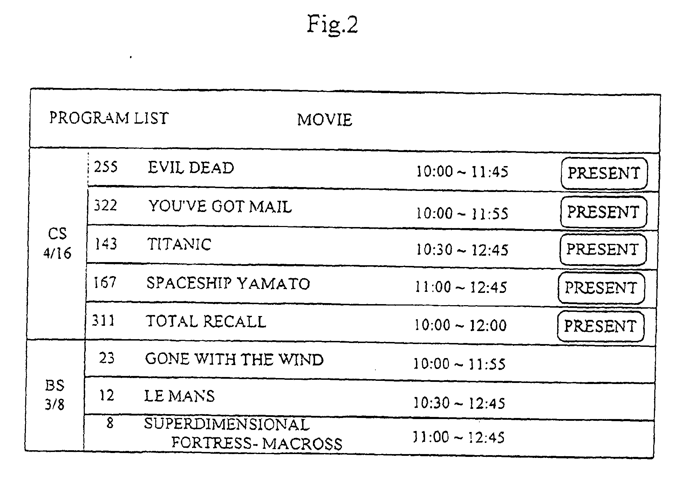

Fig. 2 shows an example of the electronic program chart displayed on the display unit 17 as integrated by the integration unit 16.

As shown in the drawing, the upper five lines of program data for the CS digital broadcast system and the lower three lines of program data for the BS digital broadcast system are integrated and displayed in the form of a single electronic program chart having eight lines.

The remaining five items of program data for the CS digital broadcast system and the remaining two items of program data for the BS digital broadcast system are not selected as program data for the electronic program chart and thus not displayed on the screen. These items of data can be displayed on the screen by the user individually scrolling the screen or page-hopping, for example.

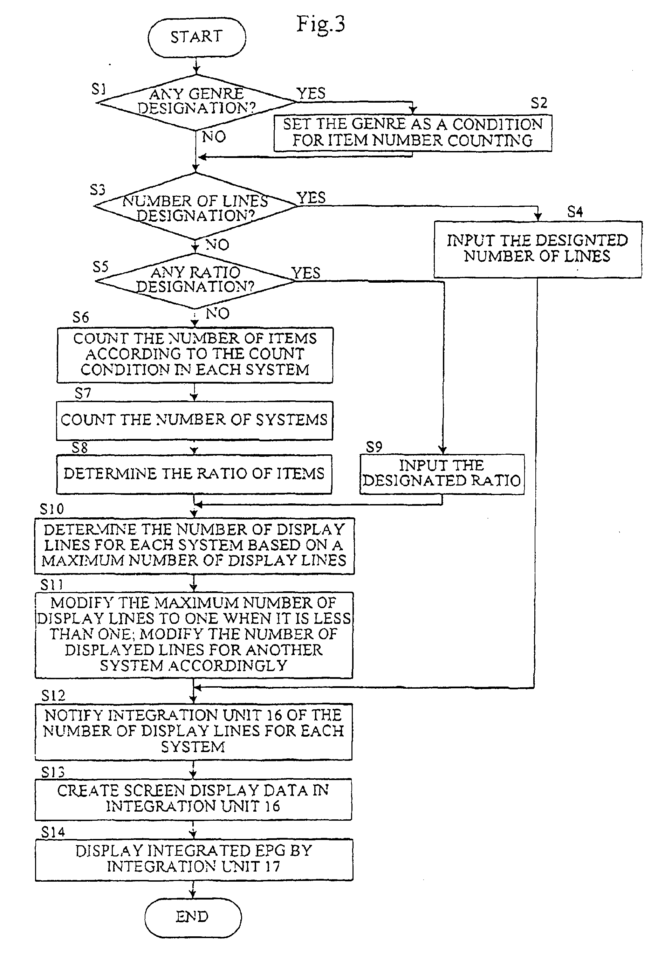

Fig. 3 shows a flowchart of the process in the display item number determination unit 18 for determining the number of items that are displayed.

The process in the display item number determination unit 18 starts when the EPG data for the CS digital broadcast system and for the BS digital broadcast system are stored in the storage unit 13. It is first determined whether or not there is a genre condition designated by the user through the designation unit 19 (step 1). If there is a genre designation, the designated genre is set as a condition for item number counting (step 2). If there is no particular condition designated by the user, no conditions are set for item number counting, and it is then determined whether there is the number of lines designated by the user using the designation unit 19 (step 3). This is designated when, for example, the user wishes to display the EPG data for the CS digital broadcast system in all of the eight lines, which is the maximum number of lines, regardless of the number of items counted. If there is a user designation concerning the number of lines, the designated number of lines is input (step 4) and the process proceeds to step 12, which will be described later. In the absence of the number of lines designation, it is then determined whether there is a designation by the user about the ratio of the numbers of display items (step 5). This designation is given when the user, for example, wishes to make the ratio of the EPG information for the CS digital broadcast system roughly 70%. Instead of the user directly setting the values of the ratio, however, statistical data based on the past preference of the user on program selections may be automatically utilized. If there is a designation of the ratio of the numbers of items to be displayed, the designated ratio, or the automatically measured statistical data, is input as a set value (step 9), and the process goes on to the next step 10 which will be described later. According to the retrieval condition set in step 2, the number of items of EPG data stored in the storage unit 13 is counted (step 6). The number of systems (two in the present case, i.e., the CS digital broadcast system and BS digital broadcast system) is also counted (step 7), and the ratio of the numbers of display items for the individual systems (2:1 in the present example) is determined (step 8) based on the number of items of EPG data counted in step 6 (10 for the CS digital broadcast system and five for the BS digital broadcast system in the present example). Further, the number of display lines for each system is determined based on the maximum number of display lines on the integrated EPG screen and the ratio of the display items determined in step 8 (step 10). In this case, while the number of display items of the EPG data for the CS digital broadcast system can be calculated by eight lines x 2/3, data below decimal point may be rounded off or dropped. In any case, the total of the numbers of display lines for the EPG data for each system must be adjusted to the maximum number of display lines on the integrated screen. Even if the thus obtained number of display lines is less than one in a particular system, the minimum number of display lines is set at one for each system (step 11). This is a processing necessary for preventing the possibility of the program data for a particular system not being displayed on the integrated EPG screen at all in the absence of a screen scroll or page hop operation when the ratio of display items calculated in step 8 is small. Thus, when the number of display EPG lines for a particular system is modified from zero to one, the number of displayed EPG items for another system which has more items must be reduced by one. Alternatively, arbitrary EPG data may be removed by user designation, for example. When the number of display EPG lines for each system on the integrated EPG screen is determined in step 11 or step 4, the determined number of display lines for each system is indicated to the integration unit 16 (step 12). The integration unit 16 selects from the EPG data stored in the storage unit 13 EPG data corresponding to the indicated number of display lines for each system, and creates display data for an integrated EPG screen (step 13). The integrated EPG screen created by the integration unit 16 is then displayed by the display unit 17 (step 14). Alternatively, the display data for the integrated EPG screen may be transmitted via the communications interface 27 and communications network 28, and processed for display on another TV receiver (not shown) on the network, and the process comes to an end.

The EPG screen data integrated by the integration unit 16 may be transmitted via the communications interface 27 to other devices on the network, so that the integrated EPG screen can be displayed on the other devices where, in addition, various operations on the screen may be performed. In this case, the other devices do not require units such as a large capacity storage unit or an integration unit, so that a small-size device can utilize the integrated EPG screen.

When the DVD 35 is connected to the communications network 28, the above-described bus reset occurs on the communications network 28 and, in response, the program information request unit 24 of the built-in CS tuner-equipped TV 10 provides the DVD 35 with a request for program information. As the request is received by the request determination unit 37 via the communications interface 36, TOC information is read from the disc 39 by the information read unit 38 and transmitted, via the communications interface 36, to the built-in CS tuner-equipped TV 10 as the program information. The TOC information from the DVD 35 is input to the conversion unit 26 of the built-in CS tuner-equipped TV 10 via the communications network 28 and communications interface 27. The conversion unit 26 extracts necessary data from the received TOC information, converts it into content data that can be assembled into the electronic program chart, and stores the data in the storage unit 13 in the same manner as the EPG data for another system.

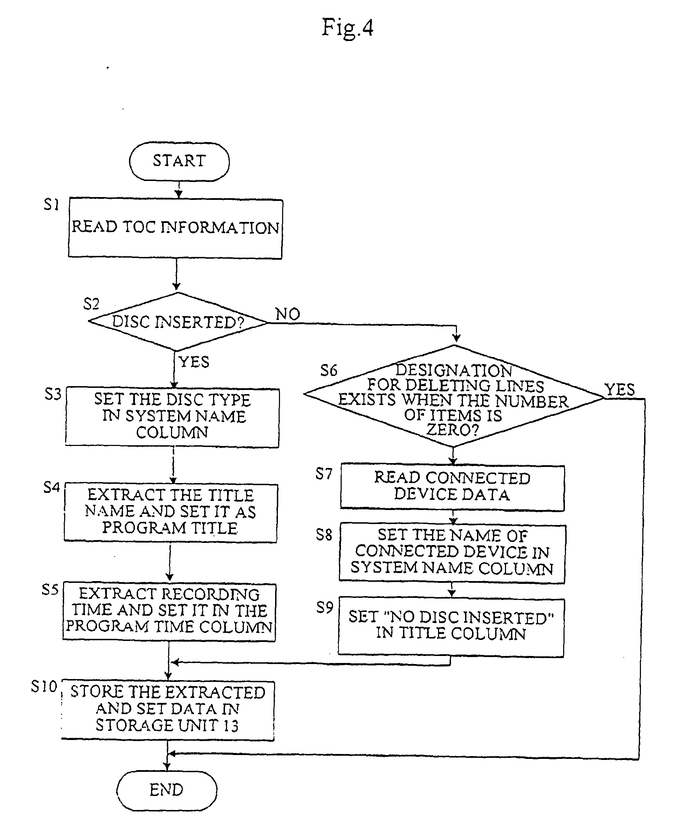

Fig. 4 shows a flowchart of the process for converting the TOC information into EPG data in the conversion unit 26.

After the conversion unit 26 reads the TOC information of the DVD 35 from the communications interface 27 (step 1), it is determined whether the disc 39 is mounted (inserted), because the disc may not be mounted even if the DVD 35 is connected on the communications network 28 (step 2). If the disc 39 is not inserted, i.e., if the number of content items is zero, it is determined whether or not there is a user designation on whether to delete a display line for the DVD 35 from the electronic program chart (step 6). If the user has allowed the deletion of the display line for the DVD 35, the process comes to an end. Even when the number of content items is zero, if the user has indicated that the display line for the DVD 35 should be left in the electronic program chart, device data is read from the DVD 35 so that what device is connected on the communications network 28 can be identified (step 7). This is necessary for displaying the information about the name of the information providing system, such as "CS" or "BS" in the left column of the electronic program chart shown in Fig. 2. In the present case, the fact that the information providing system is a DVD is read. After the name of the connected device "DVD" is set in the system name column of the electronic program chart (step 8), a title column of the electronic program chart is provided with data such as, e.g., "No disc inserted" (step 9). On the other hand, if it was confirmed in step 2 that the disc 39 is mounted, the type of the disc is extracted from the TOC information that was read in step 1 and set as the data for a system name column of the electronic program chart (step 3). For example, when the connected device is a DVD and the inserted disc is for DVD equipment, the system name and the disc type are corresponding. However, if a music CD is inserted in the DVD 35 and can be played back in the same way as a DVD disc, the system name and the disc type do not correspond. Accordingly, while in the present example the disc type is set as the data for the system name column, the connected device name may be used as the data for the system name column. Title names are extracted from the TOC information and set as the program name data in the electronic program chart (step 4). Similarly, recording time for each content is extracted from the TOC information and set as the program time data in the electronic program chart (step 5). The individual pieces of data extracted from the TOC information in steps 3-5 are stored in the storage unit 13 as content data forming the electronic program chart, together with the EPG data for another system (step 10), and the process comes to an end.

The above-described conversion processing is usually required for the TOC information. It is also possible to create the electronic program chart (integrated EPD screen) by, anticipating integration with a CS tuner or similar device, creating/recording TOC information in the disc medium and the like that is consistent with the EPG data for broadcast media, so that the TOC information read from the disc medium or the like can be stored directly, i.e., without conversion processing, in the storage unit 13 in the same manner as the EPG data in another system.

The integration unit 16 of the built-in CS tuner-equipped TV 10 reads the program information stored in the storage unit 13 and creates integrated EPG screen data integrating the EPG data or content data for the systems including the CS digital broadcast system, BS digital broadcast system, and DVD.

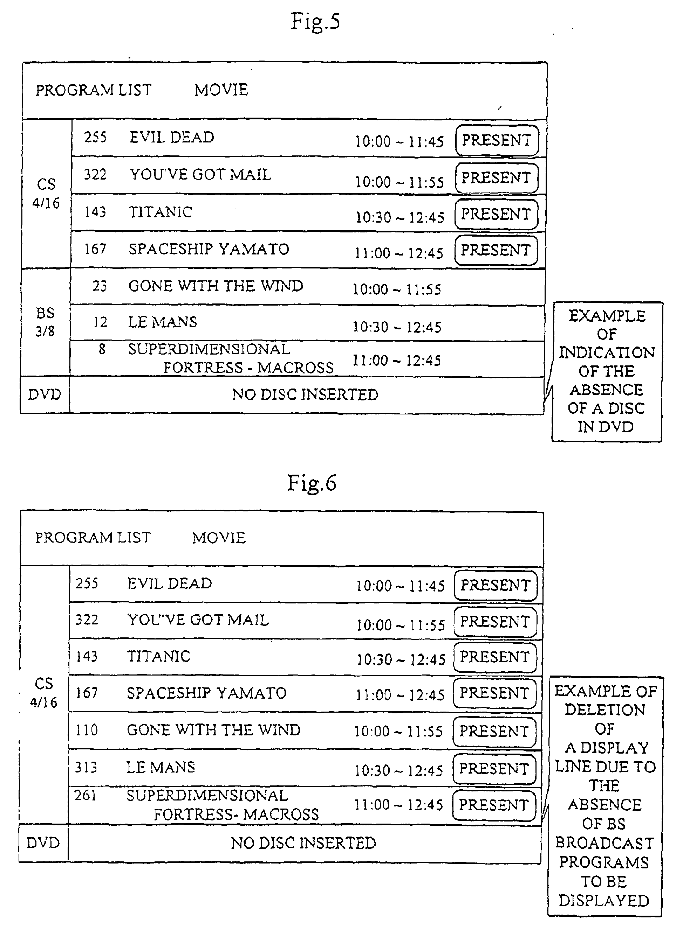

Figs. 5-7 show examples of the electronic program chart created by the integration unit 16 and displayed on the display unit 17.

Fig. 5 shows a single electronic program chart displaying in an integrated manner eight lines of program data for four programs from the CS digital broadcast system, three programs from the BS digital broadcast system and one program from the content of the DVD 35.

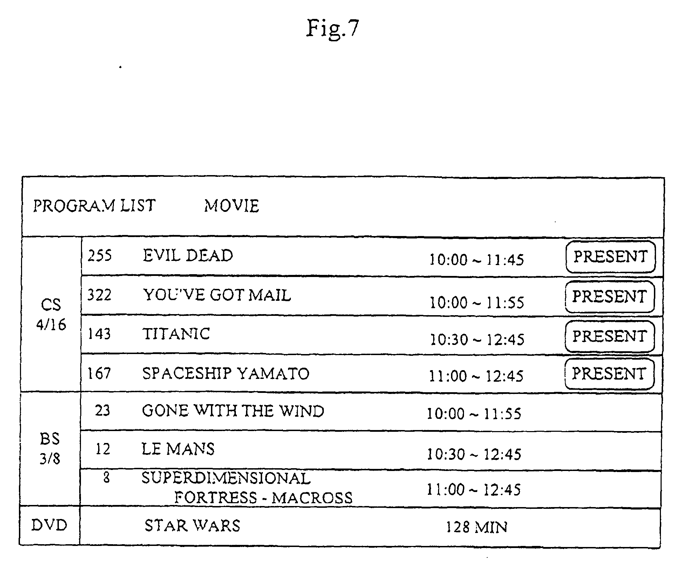

In the case where the DVD 35 is provided on the communications network 28, if the disc 39 is inserted into an empty DVD 35 or the disc 39 is replaced with another disc 39, the TOC information in the disc 39 that has been stored in the storage unit 41 is compared with the TOC information in the newly inserted disc 39. If the two pieces of information differ from each other, the change request unit 42 requests the built-in CS tuner-equipped TV 10 to change the content displayed on the integrated EPG screen. This change request is received by the change request determination unit 23 via the communications network 28 and communication interface 27, followed by the program information request unit 24 requesting the DVD 35 to transmit new content information. Upon receipt of the request, the DVD 35 transmits the TOC information read from the disc 39 by the information read unit 38 to the built-in CS tuner-equipped TV 10. The conversion unit 26 of the built-in CS tuner-equipped TV 10 converts the received TOC information into content data consistent with the EPG data in the broadcast system and renews the content of the storage unit 13 with the content data. If the content data that has been previously obtained is integrated by the integration unit 16 and is being displayed on the display unit 17, the determination unit 14 compares the data of the electronic program chart that is on display with the corresponding data stored in the storage unit 13. If the data stored in the storage unit 13 differs from the displayed data, the modification unit 15 modifies the displayed data integrated by the integration unit 16 into latest data stored in the storage unit 13. Thus, when, in an initial state, there is an indication that no disc is inserted in the DVD 35, as shown in Fig. 5 and 6, the content information display is renewed upon insertion of the disc 39 in the DVD 35, such that the information "Star Wars 128 min," for example, appears on the line for DVD, as shown in Fig. 7.

This is not limited to the DVD 35. For example, if the EPG data received by the BS digital tuner 29 is changed, a change in the integrated EPG screen data is likewise activated by the change request unit 40 of the BS digital tuner 29. If the EPG data obtained by the program information separating unit 12 of the built-in CS tuner-equipped TV 10 has been changed, a change in the integrated EPG screen data is activated by the change request unit 43.

Thus, the integrated EPG screen is once displayed based on the program information already stored in the storage unit 13 and then the display data is modified. This is so that the time between the user requesting the display of the integrated EPG screen and the actual display of the screen on the display unit 17 can be reduced.

Further, even when the EPG data received by the BS digital tuner 29 is changed, the data portion that has been changed is not always displayed on the integrated EPG screen, so that there are many cases where it is not necessary to wait for the completion of reception of the changed EPG data when the integrated EPG screen is displayed. In fact, if the change does not concern the integrated EPG screen, no problem arises if it took some time for transmission or reception of the electronic program chart data via the communications network 28.

Alternatively, the EPG data may be renewed at fixed intervals by having the program information request unit 24 request the program information from each system as long as this does not put an excessive load on the communications network or the individual information providing systems. In this case, however, if the EPG data renewal intervals are long, the display content cannot be modified until the next data renewal time even if the EPG data has already been modified when the integrated EPG screen is displayed. Accordingly, it is preferable in this case to use the request for program information as well when the integrated EPG screen is displayed.

When the display content is modified by the determination unit 14 and modification unit 15, the modification may be indicated by a mark or the like simultaneously at the portion corresponding to the modified part on the integrated EPG screen, such that the user can clearly sec where the modification has been made.

Further, when, for example, the user modified through the integrated EPG screen the information about a program that has been set for recording by the VTR timer, all or part of the integrated EPG screen may be displayed together with the modification-indicating mark, even when the user is watching a TV program.

In the present embodiment, the electronic program guide display control apparatus was realized in the built-in CS tuner-equipped TV 10 with the integrally provided display unit 17. However, the apparatus may of course be realized in a single digital CS tuner without the display unit 17. In that case, the integrated EPG screen data is displayed on the screen of a TV receiver (display unit) externally connected via a network, AV connections and the like.

Further, the electronic program guide display control apparatus may have a built-in digital CS tuner and BS digital tuner and the like, so that a plurality of different information providing systems can be received. For example, the electronic program guide display control apparatus may be realized on a home server formed by a TV receiver equipped with a digital CS tuner, BS digital tuner, DVD and hard disc.

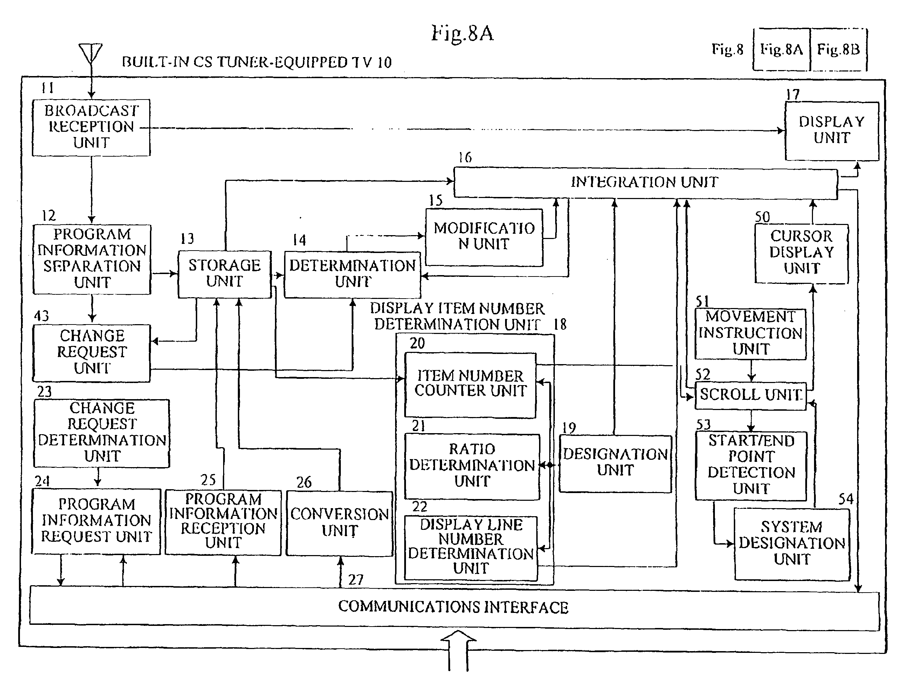

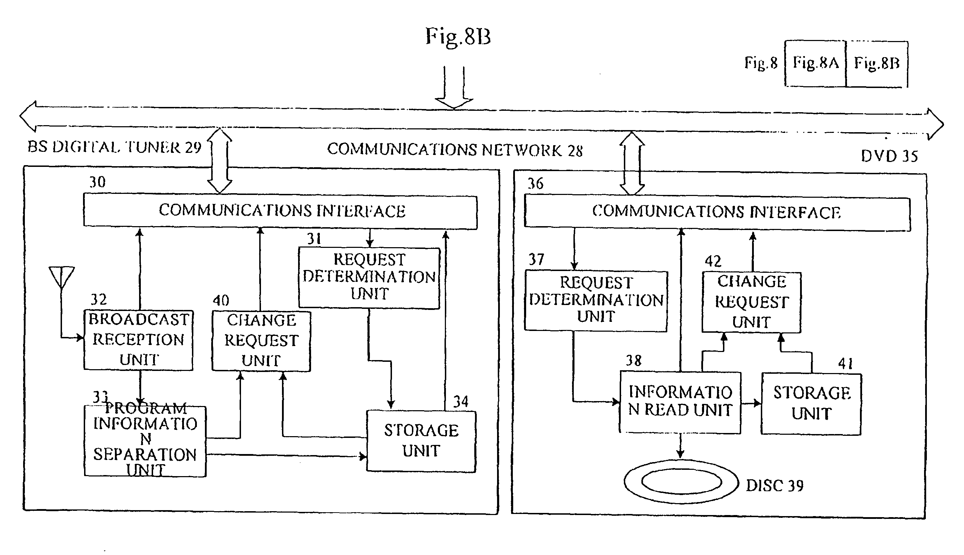

Hereafter, a second embodiment of the present invention will be described by referring to Figs. 8-10.

Fig. 8 shows a block diagram of the electronic program guide display control apparatus according to the present embodiment.

In the figure, a built-in CS tuner-equipped TV 10 includes, in addition to the elements shown in Fig. 1, a cursor display unit 50, a movement instruction unit 51, a scroll unit 52, a start/end point detection unit 53, and a system instruction unit 54. The other elements correspond to the elements shown in Fig. 1 with similar numerals and so their description is omitted.

In the first embodiment, the remaining five items on the CS digital broadcast system and the remaining two items on the BS digital broadcast system are not selected as part of the program data for the electronic program chart. While the program data not shown on the screen can be displayed by the user scrolling the screen or hopping pages in each case, this still requires an operation for, e.g., designating the program list to be scrolled. The present embodiment differs from the first embodiment in that a scroll function provided to address this problem.

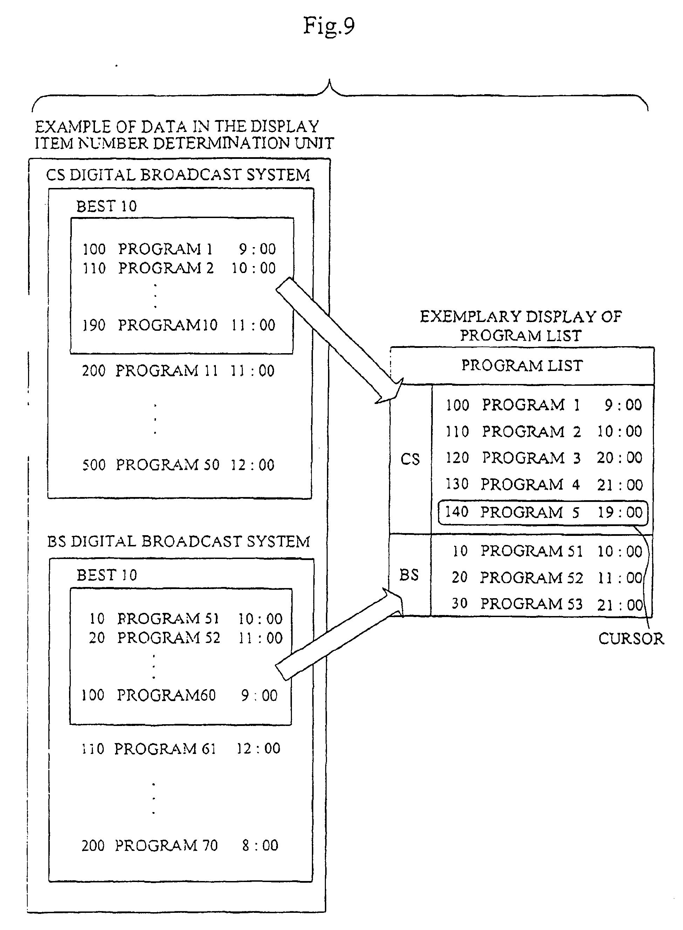

The scroll function of the electronic program guide display control apparatus according to the second embodiment will be described by referring to Fig. 9.

The following description concerns a case where 50 items from the CS digital broadcast system and 20 items from the BS digital broadcast system are extracted by the designation unit 19. The indications "100 Program 19:00" and the like indicate data about channel number, program title, and start time, but this is only an example and related information such as the story, the cast and the like may be similarly treated. According to the above description, five items from the CS digital broadcast system and three items from the BS digital broadcast system are displayed in the program list shown in the right of Fig. 9. The data in the left of the figure is stored in the item number counter unit 20 of the display item number determination unit 18, and the scroll unit 52 controls scrolling based on this data. Specifically, in the program list, program information designated by the user is indicated by a cursor mark or a color by means of the cursor display unit 50. Suppose now that the movement instruction unit 51, which gives instructions to move the cursor position up and down, has moved the cursor from CS program 1, 2, 3...and finally to program 5. As the user gives an instruction for a downward movement by the movement instruction unit 51, the scroll unit 52 performs a scroll while retaining the number of display lines determined by the display digit number determination unit 22, and displays programs 2 to 6 on the program list via the integration unit 16 and display unit 17. At the same time, the start/end point detection unit 53 detects whether, as a result of the scroll unit 52 having performed the scroll operation, the end of the scroll area in the display item number determination unit 18 has been reached. In the present example, it is detected that a CS program 50 has come to the bottom line of the CS program list column. If the user further gives an instruction for a downward scroll by the movement instruction unit 51, the system designation unit 54 changes, based on the detection result in the start/end point detection unit 53, the system designation for a scroll to the BS digital broadcast system side. The scroll unit 52 then moves the cursor to a BS program 51 in the program list, according to the system designation in the system designation unit 54. Similarly, once the cursor has reached the bottom line of the BS program list (program 53 in Fig. 9), the scroll unit 52 performs a scroll operation. As the list is scrolled to the bottom line of the BS program list where program 70 stored in the display item number determination unit 18 is displayed, the system to be scrolled is switched to the CS digital broadcast system side by the start/end point detection unit 53 and the system designation unit 54.

While in the above example the two systems, i.e., the CS digital broadcast system and BS digital broadcast system, were switched, this is only exemplary and more than two systems can be sequentially scrolled with the maximum number of lines displayed on the display unit 13 set at nine or more.

Instead of operating the upward or downward movement key through the movement instruction unit 51 in the usual manner for moving upward or downward, the systems to be scrolled may be switched by the system designation unit 54 when a particular key operation such as a double-click is performed. This way, even when the number of program items is large and it takes a long time to scroll, a scroll can be made to jump to the program list on a different system in the middle of a scroll, so that the operability can be further improved.

When it is expected that there are a great number of programs of a genre designated by the designation unit 19, the upper (best) 10 of the extracted programs for each system may be designated by the designation unit 19. In this case, the object of scrolling by the scroll unit 52 is those programs encircled as the best 10 on each of the CS digital broadcast system and BS digital broadcast system in Fig. 9, and when the CS or BS program list is scrolled in the program list, programs 1-10 on the CS side and programs 51-60 on the BS side are individually scrolled. This way, the user can confirm the best 10 programs on each of the CS and BS systems very easily and in a short period of time.

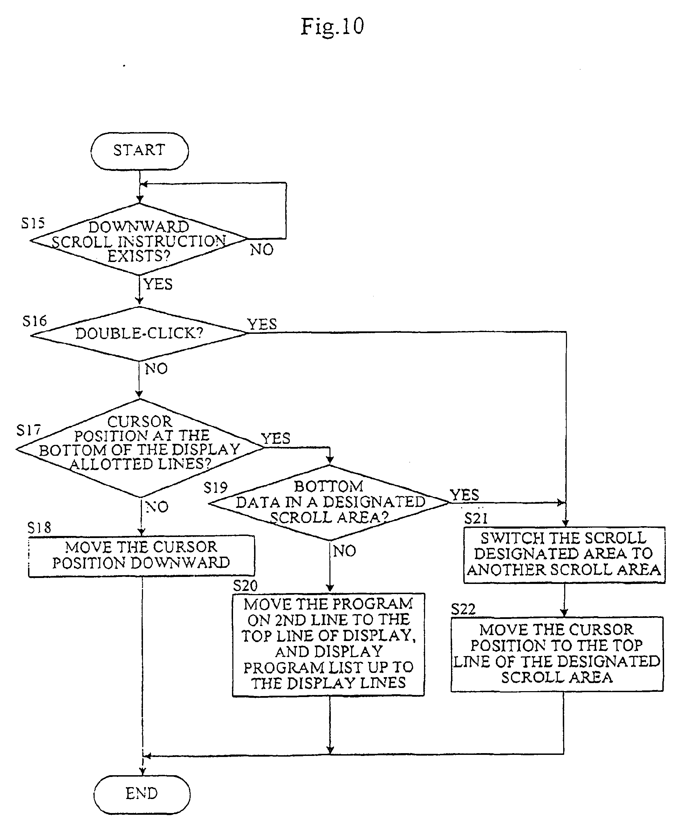

Hereafter, the processing performed by the scroll function according to the present embodiment will be described by referring to the flowchart of Fig. 10.

It is now assumed that the program list on the right of Fig. 9 is being displayed by the above-described processing for the creation of the integrated EPG screen. It is checked to see if there is a downward scroll instruction given by a user operation (step 15). While the figure shows a flowchart for processing an instruction for a downward scroll, the processing is the same for an upward scroll instruction. If there is no downward scroll instruction, the process enters a waiting state. If there is a downward scroll instruction, however, it is checked to see if it is an ordinary one or one made by a special key input operation such as a double-click (step 16). Here a double-ciick is determined as a special operation, and if a downward scroll instruction by a double-click is determined, the scroll area designation is switched to another scroll area (step 21). Specifically, in the display example of Fig. 9, the cursor, which has been located on the CS side, is moved to the BS side. This way, when the user is to give an instruction for a downward scroll by using the down arrow key on a remote controller, for example, he or she can move the cursor downward or scroll by a normal single click, or move the cursor position to the next system immediately in the integrated EPG screen by a double-click. Thus, the user can easily find necessary program information. When the downward scroll instruction by the user is a normal operation, a process for a cursor downward movement or a scroll is performed (step 17). In step 17, it is determined whether the current cursor position is, e.g., at the bottom of the display lines assigned to the CS side. If not at the bottom, the cursor position is moved downward, e.g., from program 1 to program 2 (step 18). If the cursor position is at the bottom of the display lines assigned to the CS side, it is then determined whether the data there is the bottom data in the designated scroll area (step 19). Here, as shown in Fig. 9, the bottom data in the scroll area corresponds to program 50 on the CS digital broadcast system side, and it is determined whether line five of the CS column in the display example of the program list is program 50. If the fifth line of the CS column is not program 50, the program information in line 2 of the program list that is currently shown is moved to the top line, and the program information up to line 5 is successively renewed. If the fifth line of the CS column was program 50, the scroll area is switched to another scroll area, i.e., to the BS side in the present example (step 21), and the cursor position is moved to the top line of the list on the BS side (step 22). After the cursor position is moved to the BS side and the scroll areas have been switched, the process goes back to the start of the flowchart and a similar processing is performed.

Such is the manner in which a scroll is performed in the integrated EPG screen, so that the user can scroll freely from CS to BS and vice versa by simply operating the scroll key and thus select a necessary program easily.

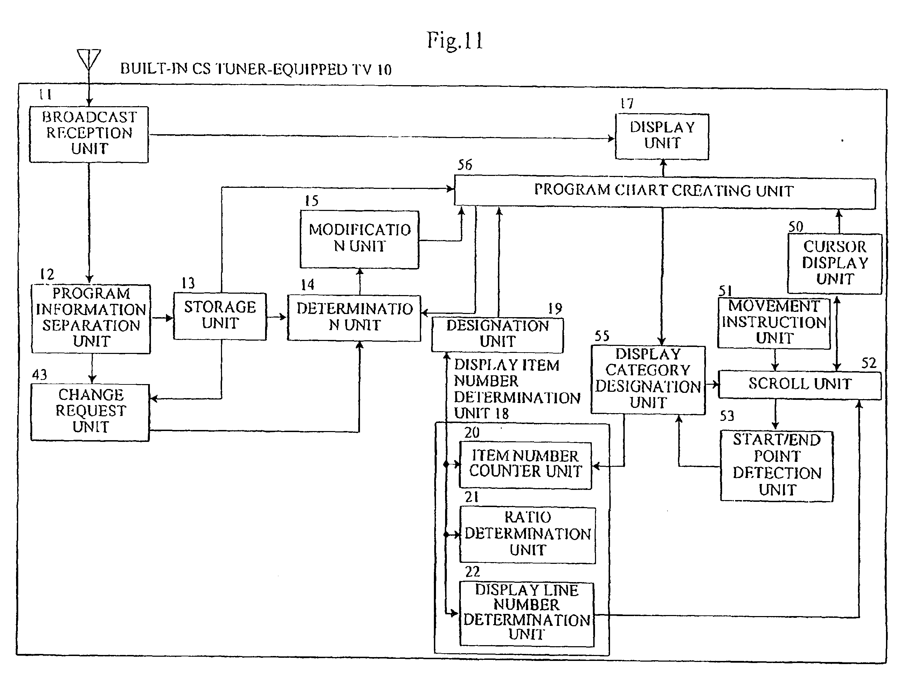

Hereafter, a third embodiment of the present invention will be described by referring to Figs. 11 to 13.

Fig. 11 shows a block diagram of the electronic program guide display control apparatus according to the present embodiment.

The electronic program guide control apparatus according to the present embodiment differs from earlier embodiments in that, while in the previous embodiments, a plurality of EPG systems were provided, the present embodiment employs a single EPG system. However, the present embodiment can also be applied to an electronic program guide display control apparatus equipped with a plurality of EPG systems.

In the drawing, numeral 55 designates a display category designation unit, and 56 a program chart creating unit. Other elements correspond to the elements of Fig. 8 which are referenced by similar numerals and are therefore not described here.

The program chart creating unit 56 does not integrate a plurality of EPGs, as the integration unit 16 of Fig. 8 does but instead creates a single EPG screen. The scroll area designation unit 55 designates a display category from the program information obtained from the storage unit 13 or program chart creating unit 56. Based on the designated display category, the item number counter unit 20 determines a plurality of scroll areas. For example, based on audience rating data sent as program information or obtained via the Internet, programs with an audience rating higher than a predetermined rating are designated, and, further, of the programs which the user has selected by the broadcast reception unit 11 and watched the most often, those programs which the user has watched more often than a predetermined number of times during a predetermined period are designated.

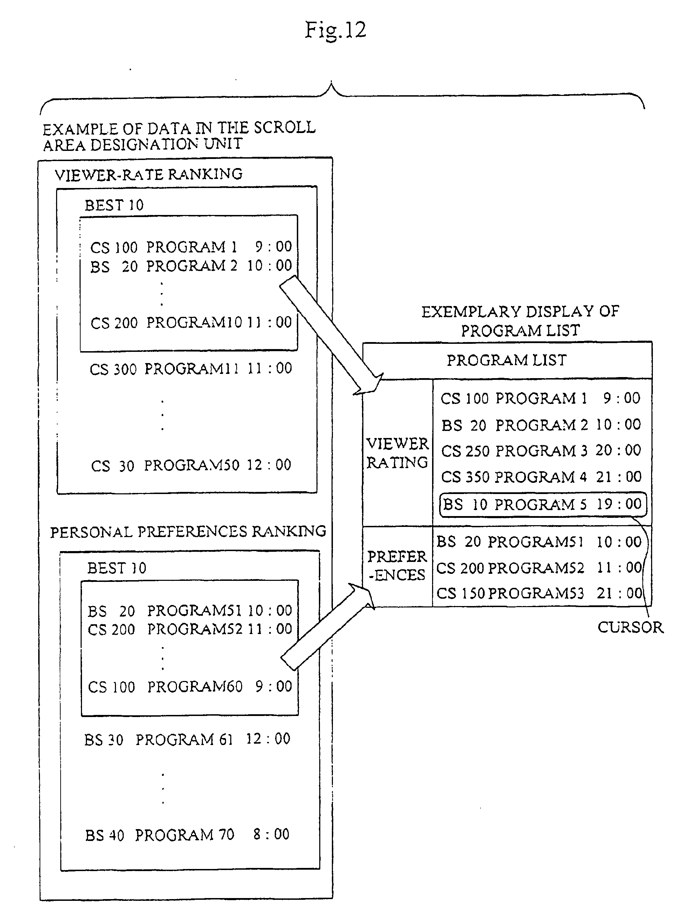

The scroll function of the electronic program guide display control apparatus according to the present embodiment will be described by referring to Fig. 12.

Here, two scroll areas, one consisting of programs 1-50 and the other consisting of programs 51-70, are determined as the scroll areas. In addition to the display category designated by the scroll area designation unit 55, it is also effective to designate, in the designation unit 19, the genre as a common extraction condition.

In the present example, the programs 1-50 arc designated in a viewer rating ranking and the programs 51-70 are designated in a personal preference ranking by the scroll area designation unit 55. While the programs 1-50 and the programs 51-70 are separately described in the illustrated example, there are usually overlapped portions in the contents of the programs 1-50 and the programs 51-70 and this does not pose a problem. Further, while the scroll areas are designated based on the viewer rating and personal preferences, the reference for judgement when selecting the programs may be the usual ones, such as, e.g., genre and personal preferences, genre and viewer rating, genre, personal preferences and viewer rating. Some of these reference items may be set in the scroll area designation unit 55 beforehand, so that the user can select necessary selection methods therefrom.

Thus, program selection information is displayed from several viewpoints simultaneously. Even if the number of the display items is large, the user can easily select necessary programs thanks to the automatic scroll shifting between the items.

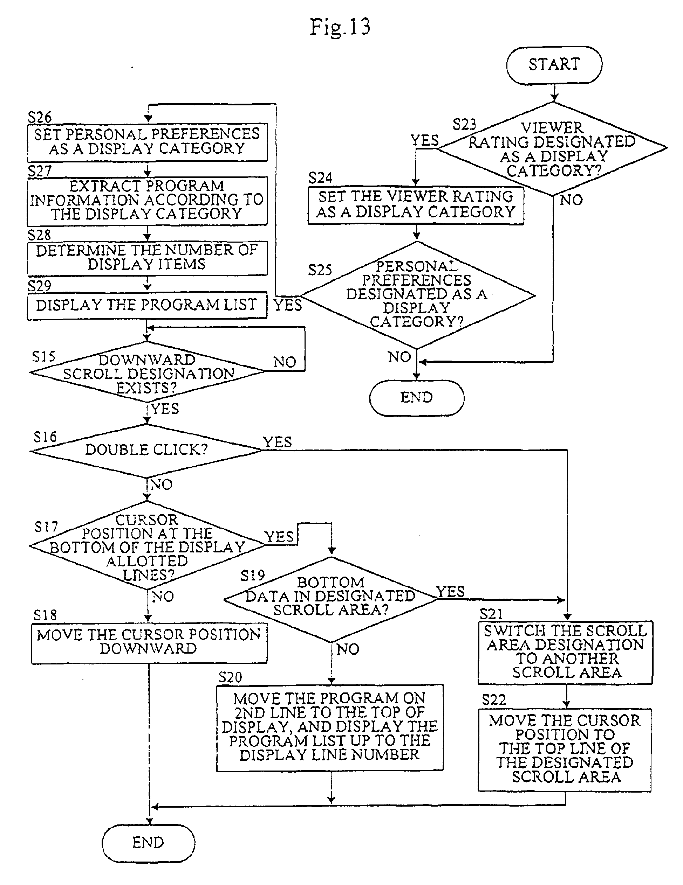

Next, the processing performed by the scroll function according to the present embodiment will be described by referring to a flowchart of Fig. 13.

In this embodiment, the program list shown in the right of Fig. 12 is displayed by the above-described processing for the creation of the integrated EPG screen.

It is checked to see if the user has designated viewer rating as a display category (step 23). If there is such a designation, the viewer rating is set as a display category (step 24). Likewise, it is checked to see if the user has designated personal preferences as a display category (step 25). If there is such designation, personal preferences are set as a display category (step 26). While in the illustrated example, two different judgement references arc processed in the flowchart, other judgement references such as genre may be processed additionally. Program information is extracted according to the display category (step 27). The extraction is performed in the item number counter unit 20 shown in Fig. 11. As there are two different display categories set, the 50 programs 1-50 and the 20 programs 51-70 are extracted as the viewer rating ranking and the personal preferences ranking, respectively, as shown in the left of Fig. 12. According to the number of extracted items of program information, the number of items that are actually displayed on the display unit 17 is determined (step 28). These processes are performed in the ratio determination unit 21 and display line number determination unit 22 and, as a result, five lines or programs are displayed for viewer rating, and three lines or programs are displayed for preferences, as shown in the right of Fig. 12. As the number of the display items is determined, the program list is displayed on the display unit 17 (step 29). After the program list is displayed, steps 15-22 arc performed, as in the case of Fig. 10. Here the program list consists of two kinds of lists, i.e., the viewer rating and preferences lists. In step 21, the bottom data in the scroll area is reached, and if the user executes a double-click or the like thereby to give an instruction for a scroll area jump, the user can freely scroll from the viewer rating list to the preferences list, or from the preferences list to the viewer rating list.

### Potential for Industrial Application

As the electronic program guide display control apparatus of the present application is thus constructed, when program information for individual information providing systems are to be integrated and displayed in the form of a single electronic program chart, the electronic program chart can be constructed and displayed with a proper ratio for each information providing system without sacrificing the program information for one or another information providing system even when a particular information providing system bar much program information.

The electronic program guide display control apparatus according to an embodiment of the present invention enables the user to directly designate a desired genre, the display ratio of each information providing system, or the number of display items for each information providing system, when program information for individual information providing systems are to be integrated and displayed in the form of a single electronic program chart. Accordingly, the program content in each information providing system can be easily confirmed even when the number of program information items that can be displayed simultaneously in the electronic program chart is limited.

The electronic program guide display control apparatus according to an embodiment of the present invention allows individual program information to be integrated, regardless of whether the program information is directly obtained from an information providing system or another information providing system on a device connected on the communications network, thus treating individual program information equally. Thus, an electronic program chart can be created and displayed for the program information for both information providing systems.

The electronic program guide display control apparatus according to an embodiment of the present invention allows, when new devices are connected on the communications network the latest program information in the individual information providing systems which is automatically obtained in each device. Accordingly, the latest program information for each information providing system can be automatically renewed or added without requiring the user to carry out bothersome setting operations.

In the electronic program guide display control apparatus according to an embodiment of the present invention, upon user request for a display of an electronic program chart, the existing program information, if any is retained, is immediately displayed. If there is any change in the original program information after the display, that change can also be incorporated.

In the electronic program guide display control apparatus according to an embodiment of the present invention if there bat been a change in the program information is any of the information providing systems, or in the content information due to replacement of the recording medium, the change can be automatically detected and the program information with the change can be incorporated.

In the electronic program guide display control appararus according to an embodiment of the present invention, the content information for a recording medium connected on the communications network is treated equally with the program information for a broadcast system, so that an electronic program chart can be created and displayed by integrating individual information.

In the electronic program guide display control apparatus according to an embodiment of the present invention, even when the content information for a recording medium on the communications network is not consistent with the program information for the broadcast system, the content information can be converted into suitable data that can be displayed in the form of an electronic program chart so that the content information can be treated equally with the program information from the broadcast system. Accordingly, an electronic program chart can be created and displayed by integrating various information.

In the electronic program guide display control apparatus according to an embodiment of the present invention, if there has been a change in the latest program information or the disc has been replaced, the electronic program chart currently on display can be modified even while the electronic program list is being displayed. Furthermore, the determination as to agreement or disagreement is not done with respect to the entire program information stored in the storage means but to the program information currently on display, so that the agreement/disagreement determination can be performed in a short period of time.

In the electronic program guide display control apparatus according to an embodiment of the present invention, the user can freely scroll from the program information list for one information providing system to the program information list for another information providing system by scrolling each program display from the integrated information providing systems. Thus, the user can easily select a desired program.

In the electronic program guide display control apparatus according to an embodiment of the present invention, when the user scrolls, as the cursor position reaches a start or end point of a scroll area, the scrolling can be automatically and easily moved from the program information list for one information providing system to the program information list for another information providing system.

In the electronic program guide display control apparatus according to an embodiment of the present invention, when the individual program information for a plurality of information providing systems are integrated and displayed in the form of a single electronic program chart, the user can designate the display categories such as genre and additionally the display ratio of each display category, so that an electronic program chart with desired display categories can be displayed even when the number of program information items that can be displayed simultaneously in the electronic program chart is limited. The invention also allows a scroll to be performed freely from a program information list sorted by one display category to another program information list sorted by another display category. Thus, programs belonging to a desired display category can be easily selected.

In the electronic program guide display control apparatus according to an embodiment of the present invention, when the electronic program chart is displayed, the user can designate a desired genre as a display category and additionally designate the display ratio of each display category. Thus, even when the number of program information items that can be simultaneously displayed in the electronic program chart is limited, the user can freely scroll from the program information list sorted by one display category to the program information list sorted by another display category while the program information list sorted by the desired display category is displayed, so that he or the can easily select a program of a desired display category.

In the electronic program guide display control apparatus according to an embodiment of the present invention, during a scroll operation by the user, as the cursor position reaches a start or end point of a scroll area, the cursor can automatically and easily move from scrolling the program information list sorted by one display category to the program information list sorted by another display category.

In the electronic program guide display control apparatus according to an embodiment of the present invention, the user can designate as a display category a list of programs with a high viewer rating, or a list of programs that the user has watched the most often.

## Claims

1. An electronic program guide display control apparatus comprising:
storage means (13) for storing program information for each of a plurality of information providing systems;
integration means (16) for creating an electronic program chart by selectively integrating program information stored in the storage means (13), said electronic program chart comprising a plurality of lines; and
display means (17) for displaying the electronic program chart created by the integration means (16),
wherein the electronic program guide display control apparatus comprises a display item number determination means (18) whereby, regarding the data for a single screen of the electronic program chart created by the integration means (16), the number of display items from each of the information providing systems that are simultaneously displayed on the single screen is determined based on the ratio of the number of items of each of the information providing systems, or by designation by a user about the ratio of numbers of display items,
wherein the display item number determination means ensures a minimum of one line of the electronic program chart to each information providing system, even when the display item number determined for a given information providing system based on the ratio of the display item numbers is less than one.

2. An electronic program guide display control apparatus according to claim 1, further comprising designation means (19) for discretionally designating the integration condition.

3. An electronic program guide display control apparatus according to claim 1 or 2, further comprising:
program information request means (24) for requesting, via a communications network, the program information for the information providing systems; and
program information reception means (25) for receiving, via a communications network (28), the program information for the information providing systems,
wherein the program information received by the program information reception means is stored in the storage means (13) for updating.

4. An electronic program guide display control apparatus according to claim 3, wherein the program information request means (24) requests the program information for the information providing systems when a bus reset is performed in the communications network (28).

5. An electronic program guide display control apparatus according to claim 3, wherein the program information request means (24) requests the program information for the information providing systems when the electronic program chart created by the integration means (16) is displayed.

6. An electronic program guide display control apparatus according to claim 3, further comprising change request determination means (23) for receiving a request for changing the content of the program information for the information providing systems, wherein the program information request means requests, when the change request determination means (23) has received a change request, at least program information whose content has been changed.

7. An electronic program guide display control apparatus according to one of claims 1 to 6, wherein the program information contains content information recorded in a recording medium mounted on the information providing system.

8. An electronic program guide display control apparatus according to claim 7, further comprising conversion means (26) for converting the content information into data that can be displayed in the form of the electronic program guide.

9. An electronic program guide display control apparatus according to one of claims 1to 8, further comprising:
determination means (14) for determining whether or not the program information integrated by the integration means (16) agrees with the program information for the information providing systems; and
modification means (15) for modifying, when the result of determination in the determination means (14) is negative, the electronic program chart, created by the integration means (16), according to the program information for the information providing systems.

10. An electronic program guide display control apparatus according to one of claims 1 to 9, further comprising:
cursor display means (50) for designating a position on a screen of the display means (17);
movement instruction means (51) for moving the position of a cursor displayed by the cursor display means (50);
scroll means (52) for scrolling the program information list for each information providing system according to the cursor position.

11. An electronic program guide display control apparatus according to one of claims 1to 10, further comprising:
start/end point detection means (53) for detecting a start point and an end point of a scroll area of each program information list for each information providing system; and
system designation means (54) for switching, when the start/end point detection means (53) has detected a start point or an end point, a scroll from one program information list which was being scrolled to another program information list.

12. An electronic program guide display control apparatus according to claim 1, further comprising:
display category designation means for displaying a program information list which is created by sorting the program information for each information providing system according to a predetermined display category;
cursor display means (50) for designating a position on a screen of the display means;
movement designation means for moving the position of a cursor displayed by the cursor display means (50); and
scroll means (52) for scrolling the program information list sorted by each display category, according to the cursor position.

13. An electronic program guide display control apparatus according to claim 12, further comprising:
start/end point detection means for detecting a start point and an end point of a scroll area in each program information list sorted by each display category;
system designation means for switching, when the start/end point detection means has detected a start point or an end point, a scroll from one program information list which was being scrolled to another program information list.

14. An electronic program guide display control apparatus according to claim 12 or 13, wherein the program information list sorted by a display category designated by the display category designation means is a high viewer-rating programs list based on viewer-rating information, or a list of programs which the user has seen most often in the past.

## Patentansprüche

1. Anzeigesteuervorrichtung für elektronischen Programmführer, mit:
Speichermitteln (13) zum Speichern von Programminformationen für jedes von mehreren Informationsbereitstellungssystemen;
Integrationsmitteln (16) zum Erzeugen einer elektronischen Programmtafel durch wahlweises Integrieren von Programminformationen, die in den Speichermitteln (13) gespeichert sind, wobei die elektronische Programmtafel mehrere Zeilen enthält; und
Anzeigemitteln (17) zum Anzeigen der elektronischen Programmtafel, die durch die Integrationsmittel (16) erzeugt wird,
wobei die Anzeigesteuervorrichtung für elektronischen Programmführer ein Anzeigeelementanzahl-Bestimmungsmittel (18) enthält, durch das in Bezug auf die Daten für einen einzelnen Bildschirm der elektronischen Programmtafel, die durch die Integrationsmittel (16) erzeugt wird, anhand des Verhältnisses der Anzahl von Elementen jedes der Informationsbereitstellungssysteme oder durch Angabe des Verhältnisses der Anzahl von Anzeigeelementen durch einen Anwender die Anzahl von Anzeigeelementen von jedem der Informationsbereitstellungssysteme, die gleichzeitig auf dem einzelnen Bildschirm angezeigt werden, bestimmt wird,
wobei das Anzeigceleinentanzahl-Bestimmungsmittel für jedes Informationsbereitstellungssystem mindestens eine Zeile der elektronischen Programmtafel selbst dann sicherstellt, wenn die Anzeigeelementanzahl, die für ein gegebenes Informationsbereitstellungssystem anhand des Verhältnisses der Anzeigeelementanzahl bestimmt wird, kleiner als eins ist.

2. Anzeigesteuervorrichtung für elektronischen Programmführer nach Anspruch 1, ferner mit Angabemitteln (19), um die Integrationsbedingung diskret anzugeben.

3. Anzeigesteuervorrichtung für elektronischen Programmführer nach Anspruch 1 oder 2, ferner mit:
Programminformationsanforderungsmitteln (24), um über ein Kommunikationsnetz die Programminformationen für die Informationsbereitstellungssysteme anzufordern; und
Programminformationsempfangsmitteln (25), um über ein Kommunikationsnetz (28) die Programminformationen für die Informationsbereitstellungssysteme zu empfangen,
wobei die von den Programminformationsempfangsmitteln empfangenen Progamminformationen in den Speichermitteln (13) für eine Aktualisierung gespeichert werden.

4. Anzeigesteuervorrichtung für elektronischen Programmführer nach Anspruch 3, wobei die Programminformationsanforderungsmittel (24) die Programminformationen für die Informationsbereitstellungssysteme anfordern, wenn in dem Kommunikationsnetz (28) ein Busrücksetzen ausgeführt wird.

5. Anzeigesteuervorrichtung für elektronischen Programmführer nach Anspruch 3, wobei die Programminformationsanforderungsmittel (24) die Programminformationen für die Informationsbereitstellungssysteme anfordern, wenn die elektronische Programmtafel, die durch die Integrationsmittel (16) erzeugt wird, angezeigt wird.

6. Anzeigesteuervorrichtung für elektronischen Programmführer nach Anspruch 3, ferner mit Änderungsanforderungsbestimmungsmitteln (23), um eine Anforderung zum Ändern des Inhalts der Programminformationen für die Informationsbereitstellungssysteme zu empfangen, wobei die Programminformationsanforderungsmittel dann, wenn die Änderungsanforderungsbestimmungsmittel (23) eine Änderungsanforderung empfangen haben, wenigstens Programminformationen anfordern, deren Inhalt geändert worden ist.

7. Anzeigesteuervorrichtung für elektronischen Programmführer nach einem der Ansprüche 1 bis 6, wobei die Programminformationen Inhaltsinformationen enthalten, die in einem Aufzeichnungsmedium aufgezeichnet sind, das an dem Informationsbereitstellungssystem angebracht ist.

8. Anzeigesteuervorrichtung für elektronischen Programmführer nach Anspruch 7, ferner mit Umsetzungsmitteln (26), um die Inhaltsinformationen in Daten umzusetzen, die in der Form des elektronischen Programmführers angezeigt werden können.

9. Anzeigesteuervorrichtung für elektronischen Programmführer nach einem der Ansprüche 1 bis 8, ferner mit:
Bestimmungsmittel (14), um zu bestimmen, ob die durch die Integrationsmittel (16) integrierten Programminformationen mit den Programminformationen für die Informationsbereitstellungssysteme übereinstimmen oder nicht; und
Modifikationsmitteln (15), um dann, wenn das Ergebnis der Bestimmung in den Bestimmungsmitteln (14) negativ ist, die elektronische Programmtafel, die durch die Integrationsmittel (16) erzeugt wird, in Übereinstimmung mit den Programminformationen für die Informationsbereitstellungssysteme zu modifizieren.

10. Anzeigesteuervorrichtung für elektronischen Programmführer nach einem der Ansprüche 1 bis 9, ferner mit:
Cursor-Anzeigemitteln (50), um eine Position auf einem Bildschirm der Anzeigemittel (17) anzugeben;
Bewegungsanweisungsmitteln (51), um die Position eines durch die Cursor-Anzeigcmittel (50) angezeigten Cursors zu bewegen;
Scroll-Mitteln (52), um die Programminformationsliste für jedes Informationsbereitstellungssystem in Übereinstimmung mit der Cursor-Position zu scrollen.

11. Anzeigesteuervorrichtung für elektronischen Programmführer nach einem der Ansprüche 1 bis 10, ferner mit:
Startpunkt-/Endpunkt-Detektionsmitteln (53), um einen Startpunkt und einen Endpunkt eines Scroll-Bereichs jeder Programminformationsliste für jedes Informationsbereitstellungssystem zu detektieren; und
Systemangabemitteln (54), um dann, wenn die Startpunkt-/Endpunkt-Detektionsmittel (53) einen Startpunkt oder einen Endpunkt detektiert haben, ein Scrollen von einer Programminformationsliste, die gescrollt wurde, zu einer weiteren Programminformationsliste umzuschalten.

12. Anzeigesteuervorrichtung für elektronischen Programmführer nach Anspruch 1, ferner mit:
Anzeigekategorie-Angabemitteln, um eine Programminformationsliste, die durch Sortieren der Programminformationen für jedes Informationsbereitstellungssystem in Übereinstimmung mit einer vorgegebenen Anzeigekategorie erzeugt wurde, anzuzeigen;
Cursor-Anzeigemitteln (50), um eine Position auf einem Bildschirm der Anzeigemittel anzugeben;
Bewegungsangabemitteln, um die Position eines durch die Cursor-Anzeigemittel (50) angezeigten Cursors zu bewegen; und
Scroll-Mitteln (52), um die durch jede Anzeigekategorie sortierte Programminformationsliste in Übereinstimmung mit der Cursor-Position zu scrollen.

13. Anzeigesteuervorrichtung für elektronischen Programmführer nach Anspruch 12, ferner mit:
Startpunkt-/Endpunkt-Detektionsmitteln, um einen Startpunkt und einen Endpunkt eines Scroll-Bereichs in jeder Programminformationsliste, die durch jede Anzeigekategorie sortiert wurde, zu detektieren;
Systemangabemitteln, um dann, wenn die Startpunkt-/Endpunkt-Detektionsmittel einen Startpunkt oder einen Endpunkt detektiert haben, ein Scrollen von einer Programminformationsliste, die gescrollt wurde, zu einer weiteren Programminformationsliste umzusehalten.

14. Anzeigesteuervorrichtung für elektronischen Programmführer nach Anspruch 12 oder 13, wobei die Programminformationsliste, die durch eine Anzeigekategorie sortiert ist, die durch die Anzeigekategorie-Angabemittel angegeben wird, eine Programmliste mit hoher Betrachtereinstufung, die auf Betrachtereinstufungsinformationen beruht, oder eine Liste von Programmen, die der Anwender in der Vergangenheit am häufigsten gesehen hat, ist.

## Revendications

1. Appareil de commande d'affichage de guide électronique de programme comprenant :
des moyens de stockage (13) pour stocker des informations de programme pour chacun d'un ensemble de systèmes fournisseurs d'informations ;
des moyens d'intégration (16) pour créer un tableau de programmes électronique en intégrant sélectivement des informations de programme stockées dans les moyens de stockage (13), le tableau de programmes électronique comprenant plusieurs lignes ; et
des moyens d'affichage (17) pour afficher le tableau de programmes électronique créé par les moyens d'intégration (16),
étant précisé que l'appareil de commande d'affichage de guide de programme électronique comprend des moyens de détermination de nombre d'articles d'affichage (18), moyennant quoi en considérant les données pour un seul écran du tableau de programmes électronique créé par les moyens d'intégration (16), le nombre d'articles d'affichage provenant de chacun des systèmes fournisseurs d'informations qui sont affichés simultanément sur l'écran unique est déterminé sur la base du rapport du nombre d'articles de chacun des systèmes fournisseurs d'informations, ou par désignation par un utilisateur sur le rapport de nombres d'articles d'affichage,
étant précisé que les moyens de détermination de nombre d'articles d'affichage assure un minimum d'une ligne du tableau de programmes électronique pour chaque système fournisseur d'informations, même quand le nombre d'articles d'affichage déterminé pour un système fournisseur d'informations donné, sur la base du rapport des nombres d'articles d'affichage, est inférieur à un.

2. Appareil de commande d'affichage de guide de programme électronique selon la revendication 1, comprenant par ailleurs des moyens de désignation (19) pour désigner discrètement la condition d'intégration.

3. Appareil de commande d'affichage de guide de programme électronique selon la revendication 1 ou 2, comprenant par ailleurs :
des moyens de demande d'informations de programme (24) pour demander, par l'intermédiaire d'un réseau de communications, les informations de programme pour les systèmes fournisseurs d'informations ; et
des moyens de réception d'informations de programme (25) pour recevoir, par l'intermédiaire d'un réseau de communications (28), les informations de programme pour les systèmes fournisseurs d'informations,
étant précisé que les informations de programme reçues par les moyens de réception d'informations de programme sont stockées dans les moyens de stockage (13) pour une actualisation.

4. Appareil de commande d'affichage de guide de programme électronique selon la revendication 3, étant précisé que les moyens de demande d'informations de programme (24) demandent les informations de programme pour les systèmes fournisseurs d'informations quand une réinitialisation de bus est réalisée dans le réseau de communications (28).

5. Appareil de commande d'affichage de guide de programme électronique selon la revendication 3, étant précisé que les moyens de demande d'informations de programme (24) demandent les informations de programme pour les systèmes fournisseurs d'informations quand le tableau de programmes électronique créé par les moyens d'intégration (16) est affiché.

6. Appareil de commande d'affichage de guide de programme électronique selon la revendication 3, comprenant par ailleurs des moyens de détermination de demande de changement (23) pour recevoir une demande de changement du contenu des informations de programme pour les systèmes fournisseurs d'informations, étant précisé que les moyens de demande d'informations de programme, quand les moyens de détermination de demande (23) ont reçu une demande de changement, demandent au moins des informations de programme dont le contenu a été change.

7. Appareil de commande d'affichage de guide de programme électronique selon l'une des revendications 1 à 6, étant précisé que les informations de programme contiennent des informations de contenu enregistrées dans un support d'enregistrement monté sur le système fournisseur d'informations.

8. Appareil de commande d'affichage de guide de programme électronique selon la revendication 7, comprenant par ailleurs des moyens de conversion (26) pour convertir les informations de contenu en données qui puissent être affichées sous la forme du guide de programme électronique.

9. Appareil de commande d'affichage de guide de programme électronique selon l'une des revendications 1 à 8, comprenant par ailleurs :
des moyens de détermination (14) pour déterminer si les informations de programme intégrées par les moyens d'intégration (16) concordent ou non avec les informations de programme pour les systèmes fournisseurs d'informations ; et
des moyens de modification (15) pour modifier, quand le résultat de la détermination dans les moyens de détermination (14) est négatif, le tableau de programmes électronique, créé par les moyens d'intégration (16), selon les informations de programme pour les systèmes fournisseurs d'informations.

10. Appareil de commande d'affichage de guide de programme électronique selon l'une des revendications 1 à 9, comprenant par ailleurs :
des moyens d'affichage de curseur (50) pour désigner une position sur un écran des moyens d'affichage (17) ;
des moyens d'instruction de mouvement (51) pour déplacer la position d'un curseur affiché par les moyens d'affichage de curseur (50) ;
des moyens de défilement (52) pour faire défiler la liste d'informations de programme pour chaque système fournisseur d'informations selon la position du curseur.

11. Appareil de commande d'affichage de guide de programme électronique selon l'une des revendications 1 à 10, comprenant par ailleurs :
des moyens de détection de point de commencement/de fin (53) pour détecter un point de commencement et un point de fin d'une zone de défilement de chaque liste d'informations de programme pour chaque système fournisseur d'informations ; et
des moyens de désignation de système (54) pour faire passer un défilement, quand les moyens de détection de point de commencement/de fin (53) ont détecté un point de commencement ou un point de fin, d'une liste d'informations de programme qui était en cours de défilement à une autre liste d'informations de programme.

12. Appareil de commande d'affichage de guide de programme électronique selon la revendication 1, comprenant par ailleurs :
des moyens de désignation de catégorie d'affichage pour afficher une liste d'informations de programme qui est créée grâce au classement des informations de programme pour chaque système fournisseur d'informations selon une catégorie d'affichage prédéterminée ;
des moyens d'affichage de curseur (50) pour désigner une position sur un écran des moyens d'affichage ;
des moyens de désignation de déplacement pour déplacer la position d'un curseur affiché par les moyens d'affichage de curseur (50) ; et
des moyens de défilement (52) pour faire défiler la liste d'informations de programme classée par chaque catégorie d'affichage, selon la position du curseur.

13. Appareil de commande d'affichage de guide de programme électronique selon la revendication 12, comprenant par ailleurs :
des moyens de détection de point de commencement/de fin pour détecter un point de commencement et un point de fin d'une zone de défilement dans chaque liste d'informations de programme classée par chaque catégorie d'affichage ;
des moyens de désignation de système pour faire passer un défilement, quand les moyens de détection de point de commencement/de fin ont détecté un point de commencement ou un point de fin, d'une liste d'informations de programme qui était en cours de défilement à une autre liste d'informations de programme.

14. Appareil de commande d'affichage de guide de programme électronique selon la revendication 12 ou 13, étant précisé que la liste d'informations de programme classée par une catégorie d'affichage désignée par les moyens de désignation de catégorie d'affichage est une liste de programmes à cote d'écoute élevée basée sur des informations de cote d'écoute, ou une liste de programmes que l'utilisateur a vus le plus souvent par le passé.
